# EUROPEAN PATENT APPLICATION

(11) **EP 3 467 759 A1**
(43) Date of publication of application: **10.04.2019**
(21) Application number: 17802827.0
(22) Date of filing: 24.05.2017
(51) Int. Cl.: G06Q 50/10

(54) **WAITING ORDER MANAGEMENT SYSTEM AND PROGRAM**

(30) Priority: 27.05.2016 JP 2016106606
(71) Applicant: Recruit Co., Ltd., Chuo-ku Tokyo 1040061 (JP)
(72) Inventor: WATASE, Takehiro, Tokyo 100-6640 (JP); SHINTANI, Akinori, Tokyo 100-6640 (JP)
(74) Representative: EIP
(86) International application number: PCT/JP2017/019315
(87) International publication number: WO 2017/204241

(57) **Abstract**

The purpose of the present invention is to enable a user waiting for his/her turn to utilize a specific function in accordance with a waiting status. A queue management system (1000) for managing waitings of users at establishments, the queue management system (1000) being provided with a storage unit (110) which stores a waiting list for retaining information relating to a status of a user at each establishment; and a function addition unit (120) which adds a function available only during a specific status, to a portable terminal (300) owned by a user.

## Description

### Cross-Reference to Related Applications

The present application is based on Japanese Patent Application No. 2016-106606 filed on May 27, 2016, contents of which are incorporated herein by reference.

### Technical Field

The present invention relates to a queue management system and a program.

### Background Art

In the related art, in restaurants, stores, hospitals, banks, government offices, or the like, various queue management systems are adopted in order to organize waitings of customers who are waiting the service.

For example, in a system disclosed in Patent Document 1, a subscriber registers a waiting for a restaurant by inputting waiting information by bringing a portable phone close to a predetermined position of a waiting management device, and if there is room in a seat, waiting end information is notified to the portable phone of the subscriber from the waiting management device.

### Citation List

### Patent Document

Patent Document 1: Japanese Patent Application Laid-Open No. 2004-94380

### Summary

### Technical Problem

However, in a queue management system of the related art, a function capable of being provided to a portable phone of a subscriber is only to notify the subscriber of his/her turn, and there is no provision of functions capable of being used depending on a waiting situation, such as in the waiting or after the call.

The present invention has been made in view of the foregoing problem and an object of the present invention is to provide a technique to enable a user waiting for his/her turn to utilize a specific function in accordance with a waiting status.

### Solution to Problem

According to an aspect of the present embodiment, there is provided a queue management system that manages waitings of users at establishments, the system including: a storage unit which stores a waiting list for retaining information relating to a status of a user at each establishment; and a function addition unit which adds a function available only during a specific status, to a portable terminal owned by a user.

The function available only during the specific status may include a function for calling an employee of the establishment.

The function available only during the specific status may include a function for reporting a request item to the employee of the establishment.

In a case where a number of waiting parties is greater than or equal to a predetermined number, the function addition unit may not add the function available only during the specific status, to the portable terminal owned by the user.

In a case where a number of waiting parties is greater than or equal to the predetermined number, the function addition unit may limit a content of the function available only during the specific status.

Furthermore, the queue management system may include a notification unit that notifies a terminal viewed by the employee that the function available only during the specific status is used by the user.

According to another aspect of the present embodiment, there is provided a queue management system that manages waitings of a fitting room, the system including: a storage unit which stores a waiting list for retaining information relating to a status of a user of a fitting room; and a function addition unit which adds a function capable of calling a store clerk only while using the fitting room to a portable terminal owned by the user.

### Advantageous Effects of Invention

According to the present invention, it is possible to enable a user waiting for his/her turn to utilize a specific function in accordance with a waiting status.

### Brief Description of Drawings

Fig. 1 is a diagram illustrating a schematic configuration of a queue management system 1000 according to an embodiment of the present invention.
Fig. 2 is a block diagram illustrating a main configuration of a queue management terminal 200.
Fig. 3 is a flowchart of a registration reception process of a waiting at the queue management system 1000 according to the embodiment of the present invention.
Fig. 4 is a diagram illustrating an example of a reception screen for receiving a waiting.
Fig. 5 is a diagram illustrating an example of a fitting information input screen.
Fig. 6 is a diagram illustrating an example of a reception completion screen.
Fig. 7 is a flowchart of an update process of a waiting list in the queue management system 1000 according to the embodiment of the present invention.
Fig. 8 is a diagram illustrating an example of a status management screen.
Fig. 9 is a sequence diagram for explaining a function that is able to be used only when a status is in service in the queue management system 1000 according to the embodiment of the present invention.
Fig. 10 is a diagram illustrating an example of a function button displayed on a user terminal 300.
Fig. 11 is a diagram illustrating an example of a status management screen.

### Description of Embodiments

Hereinafter, an embodiment of the present invention will be described in detail with reference to the drawings. The same components are denoted by the same reference numerals, and duplicate descriptions will not be repeated.

Although, the present embodiment describes an example when managing waitings of a fitting room at a clothing store, the present invention is also applied to any establishments, such as restaurants, hospitals, banks, government offices, amusement parks, shopping malls, department stores, or movie theaters, that perform a management of the waitings of the users who are using the establishments.

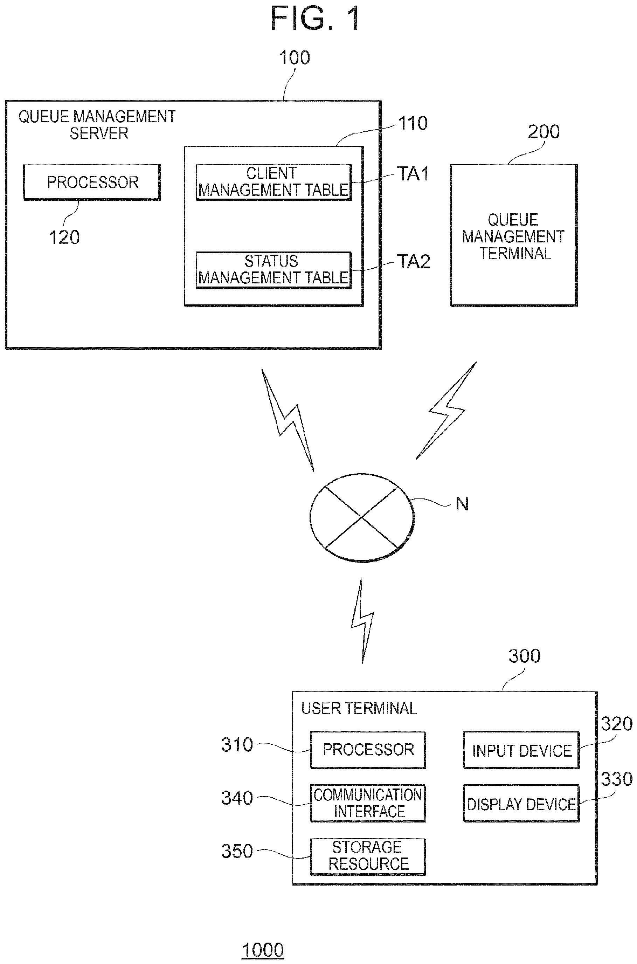

Fig. 1 is a diagram illustrating a schematic configuration of a queue management system 1000 according to the embodiment of the present invention. As shown in Fig. 1, the queue management system 1000 includes a queue management server 100 installed in a management center or the like, a queue management terminal 200 installed in each establishment, and a user terminal 300 owned by a user of the establishment. The queue management server 100 is connected to the queue management terminal 200 and the user terminal (portable terminal) 300 via a communication network N.

The queue management server 100 manages waitings for each establishment registered via the queue management terminal 200 or the user terminal 300. The queue management server 100 is configured by a general purpose computer and realizes a server function by operating a predetermined server program in the computer. A computer configuring the queue management server 100 is not necessarily one, the computer may be composed of a plurality of computers distributed over the communication network N.

The queue management server 100 includes a management database (storage unit) 110 for managing the queue management terminal 200 for each establishment and a processor (a function addition unit, a notification unit) 120. The management database 110 includes a client management table TA1 and a status management table TA2.

In the client management table TA1, unique IDs and passcords (accounts) assigned to the queue management terminal 200, a group ID of a group to which the establishment belongs, and information indicating a possibility of a batch registration (flag, or the like) are registered in association with each establishment. For example, a record of "clothing store A" is set to "ID: A1 ...", "passcode: AA2 ...". The above information is set by, for example, an administrator (for example, the owner of the store, or the like) who performs a waiting management at each establishment at the time of installing the system. Note that, in the embodiment, it is assumed that one queue management terminal 200 is used at one establishment, but a plurality of queue management terminals 200 may be used at one establishment. In a case where the plurality of queue management terminals 200 is used at one establishment, same IDs and passcords may be used, but a plurality of IDs and passcords may be selectively used according to a predetermined condition, for example.

A waiting list at each establishment is registered in the status management table TA 2. The waiting list includes a list of person who is waiting (waiting party) and information which indicates a status of waiting of each waiting party (status information). For example, for the clothing store A, a first record of the waiting list includes information such as, reception number "1", reception time "13:03", the number of clothes to be tried on specified at reception "3 clothes", size "M", status "in wait", store clerk call flag "0", or the like.

The status includes "in wait" which is a state before a turn (a state where a user is waiting for the fitting room to become available), "on call" which is a state where a turn is informed (a state where the fitting room is available and the turn has informed), "in service" which is a state where a user whose turn has come is guided and the user is being serviced (a state where a user is guided to the fitting room, tries on clothes, exchanges commodities), "service completed" which is a state the service has been completed (a state where the use of the fitting room has completed), and "canceled" which is a state where the waiting is canceled, or the like. The administrator, or the like of each establishment is able to appropriately set or change item settings relating to the status.

The number of clothes is the number of clothes brought into the fitting room by the user during trial fitting and the size is information on the size of clothes brought into the fitting room. In addition, as described later, the store clerk call flag is a flag in which a value becomes "1" when a user calls up a store clerk while using the fitting room.

The administrator, or the like of each establishment are also able to appropriately set or change information included in the waiting list. Contents of the waiting list are updated based on a new registration information to the waiting list sent from the queue management terminal 200 or the user terminal 300, or based on update information of status (details will be described later).

The processor 120 is composed of an arithmetic logic unit (CPU or the like) for processing arithmetic operations, logical operations, bit operations and the like, and various registers. Also, the processor 120 centrally controls each part of the queue management server 100 by executing various programs stored in the storage means such as ROM. Further, the processor 120 executes a computer program (queue management application) for managing the waiting in cooperation with the queue management terminal 200.

The communication network N includes a communication network capable of mutually transmitting and receiving information between the queue management server 100, and the queue management terminal 200 and the user terminal 300. The communication network N may be any of an Internet, a LAN, a dedicated line, a telephone line, an intra-network for company, a mobile communication network, a Bluetooth (registered trademark), a wireless fidelity (WiFi), other communication lines, a combination thereof, or the like. And the communication network N may be wired or wireless.

The queue management terminal 200 is installed in each establishment that provides a service, receives a registration of a waiting for a user, and also receives a confirmation or an update operation of the waiting status from an employee (store clerk) of the establishment. In the clothing store A, for example, the queue management terminal 200 is installed in the vicinity of a counter where a store clerk stands by. Note that, an example of Fig. 1 illustrates only one queue management terminal 200, however, the queue management terminals 200 installed in the plurality of establishments are managed by the queue management server 100.

The queue management terminal 200 is able to use any terminal devices, which are a tablet terminal, a personal computer (PC), a notebook PC, a smart phone, a portable phone, a personal digital assistant (PDA), or the like, capable of exchanging data with the queue management server 100 via the communication network N.

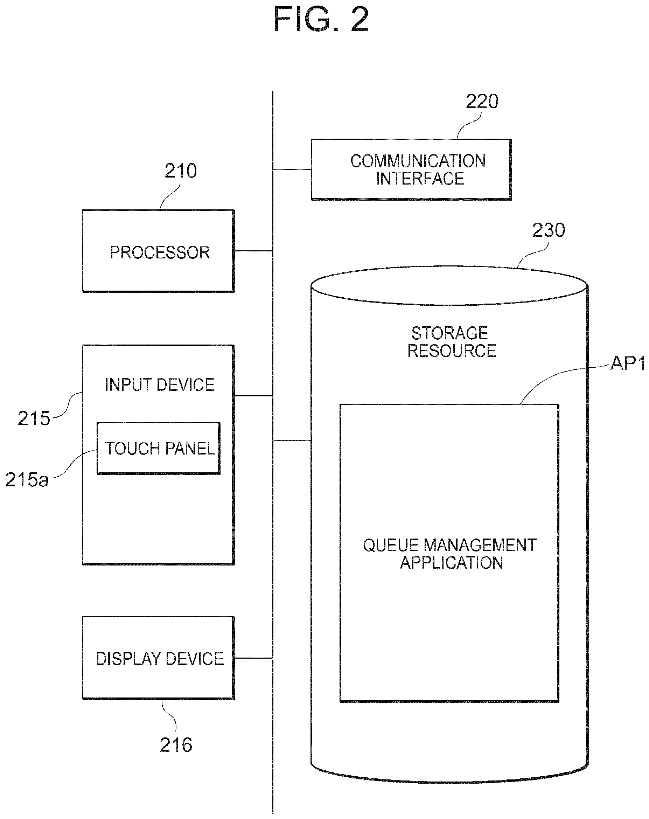

Fig. 2 is a block diagram illustrating a main configuration of the queue management terminal 200. The queue management terminal 200 includes a processor (batch registration reception unit) 210, an input device 215, a display device 216, a communication interface 220, and a storage resource 230. When a user directly operates the input device 215 such as a touch panel, the queue management terminal 200 receives an input which is a reception or a deletion on the waiting list. Here, as a user, an employee or the like is assumed other than a visitor. For example, the visitor performs the input for registering a new waiting on the waiting list, and the employee performs the input for updating the status of the information registered in the waiting list. In this case, administrators or store clerks of establishments are collectively referred to as employees or the like.

The processor 210 is composed of an arithmetic logic unit (CPU or the like) for processing arithmetic operations, logical operations, bit operations and the like, and various register s. Also the processor 210 centrally controls each part of the queue management terminal 200 by executing various programs stored in the storage resource 230. The various registers are, for example, a program counter, a data register, an instruction register, a general register or the like.

The input device 215 includes various operation buttons or the touch panel 215a for receiving inputs such as the reception to the waiting list and the deleting from the waiting list.

The display device 216 is a device for displaying a reception screen or a standby screen including the waiting list, a reception button, or the like, and the device is composed of, for example, a liquid crystal display.

The communication interface 220 is a hardware module that connects to the communication network N and communicates with other terminals on the communication network N. The communication interface 220 is, for example, a modulation demodulation device such as an ISDN modem, an ADSL modem, a cable modem, an optical modem, a soft modem, or the like.

The storage resource 230 is, for example, a logical device provided by a storage area of a physical device. The physical device is, for example, a computer readable recording medium such as a disk drive or a semiconductor memory (ROM, RAM, or the like). The storage resource 230 may be configured by mapping a plurality of physical devices to one logical device or may be configured by mapping one physical device to a plurality of logical devices.

The storage resource 230 stores an operating system program, a driver program, various data, or the like. As the driver program, for example, there is a communication interface driver program for controlling the communication interface 220 or the like. Further, the storage resource 230 stores a computer program (queue management application) AP1 for managing the waiting in cooperation with the queue management server 100 by executing the processor 210 in addition to the various programs or various data.

The user terminal 300 is a terminal owned by a user of the service, such as a smart phone, a portable phone, a tablet terminal, a wearable device, or the like. The user terminal 300 includes the storage resource 350 such as a processor 310, an input device 320 such as various operation buttons or a touch panel, a display device 330 such as a liquid crystal display, a communication interface 340 for connecting to the communication network N, a disk drive, or a semiconductor memory (ROM, RAM, or the like). Further, the storage resource 350 stores a computer program (queue management application) for managing the waiting in cooperation with the queue management server 100 by executing the processor in addition to the various programs or various data. The user is capable of registering the waiting to each establishment via a web browser installed in the user terminal 300 or other application. Note that, since the hardware configuration of each element of the user terminal 300 is the same as the corresponding element of the queue management terminal 200, duplicate descriptions will not be repeated.

Next, an operation of the queue management system 1000 in the present embodiment will be described.

It is assumed that a user of the queue management system 1000 is a user or an employee of the establishment. The user operates the queue management terminal 200 installed in the establishment to register the waiting. The user connects to a reservation website using the user terminal 300 owned by the user, and is able to perform the registration of the waiting.

### (Registration of waiting to waiting list)

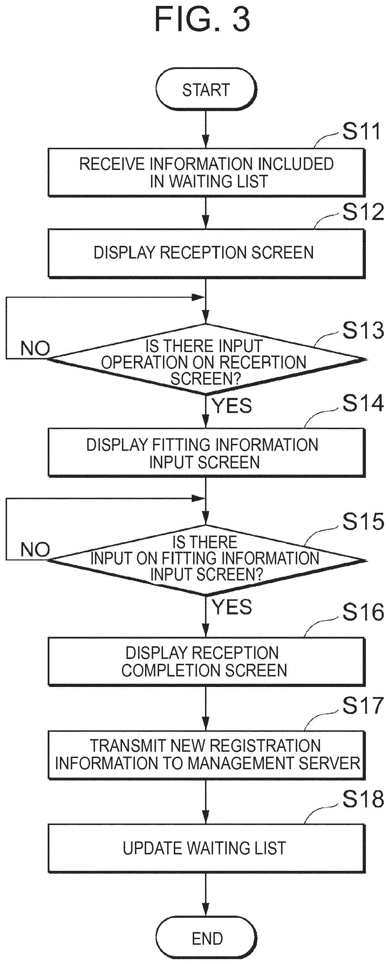

Fig. 3 is a flowchart illustrating a flow of a reception process of a registration of waiting at the queue management system 1000. Here, an explanation will be given by taking as an example a case where a user who visited a store performs a registration of waiting for using a fitting room at a clothing store A using the queue management terminal 200.

The queue management terminal 200 receives information included in a waiting list registered in the status management table TA2 from the queue management server 100 via the communication interface 220 (step S11).

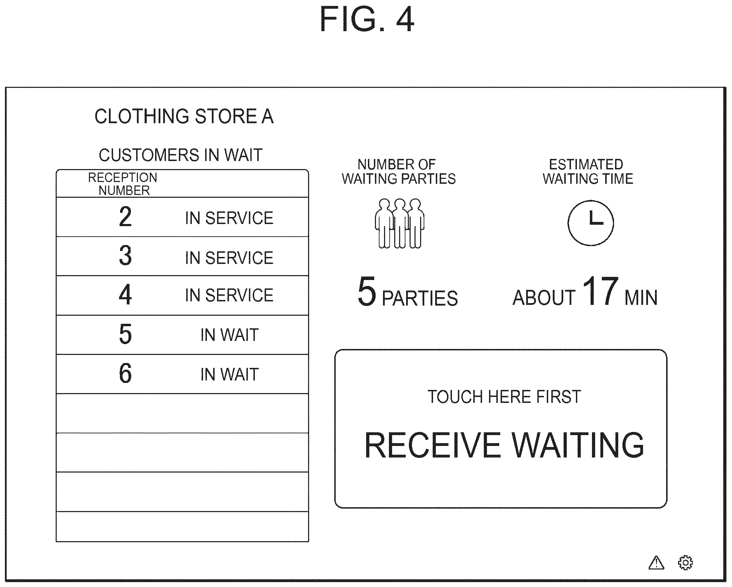

Next, the queue management terminal 200 causes the display device 216 to display the reception screen in order to perform a reception of the waiting as exemplified in Fig. 4 (step S12).

Fig. 4 is a diagram illustrating an example of the reception screen displayed on the display device 216 of the queue management terminal 200. As shown in Fig. 4, on the reception screen, at least a part of the waiting list registered in the status management table TA2 of the queue management server 100, for example, a list, in which reception numbers and the current statuses of users waiting for their turn are arranged in a time series manner in order of reception, is displayed. Also, the number of waiting parties currently waiting is also displayed. Further, estimation of a waiting time, a message prompting the reception operation to the waiting list, reception buttons, or the like are displayed on the display device 216. As an estimation of the waiting time, it is possible to use a value calculated by multiplying the current waiting party number by the average waiting time per one party. Note that, the administrator of each establishment is able to decide the items displayed on the reception screen according to the intention of the administrator.

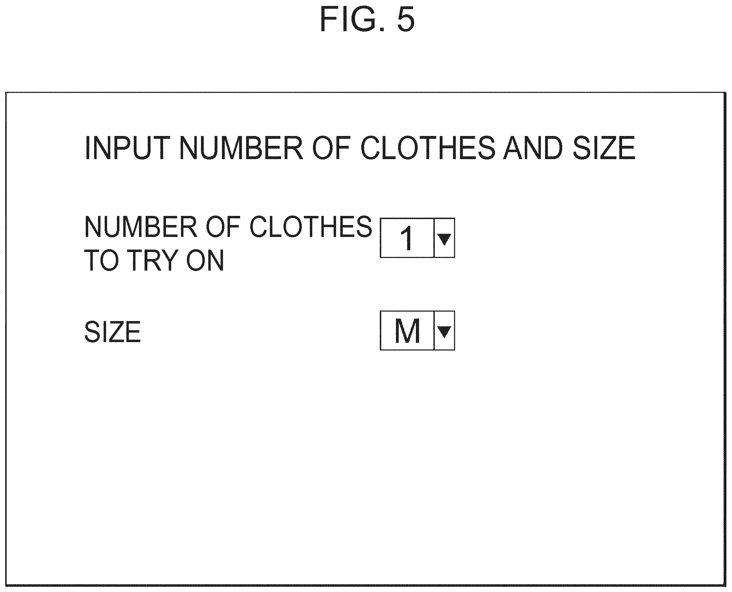

The queue management terminal 200 detects whether or not an input operation via the input device 215 such as the touch panel 215a by a user is performed on the displayed reception screen (step S13). For example, when an operation on the touch panel 215a is detected and an input is received (step S13: YES), as shown in Fig. 5, a fitting information input screen for inputting information relating to the number and the size of clothes to be tried on, is displayed (step S14). As shown in Fig. 5, on the fitting information input screen, messages prompting the input operation of the number and the size of clothes to be tried on, buttons for inputting the number and the size of clothes, or the like are displayed.

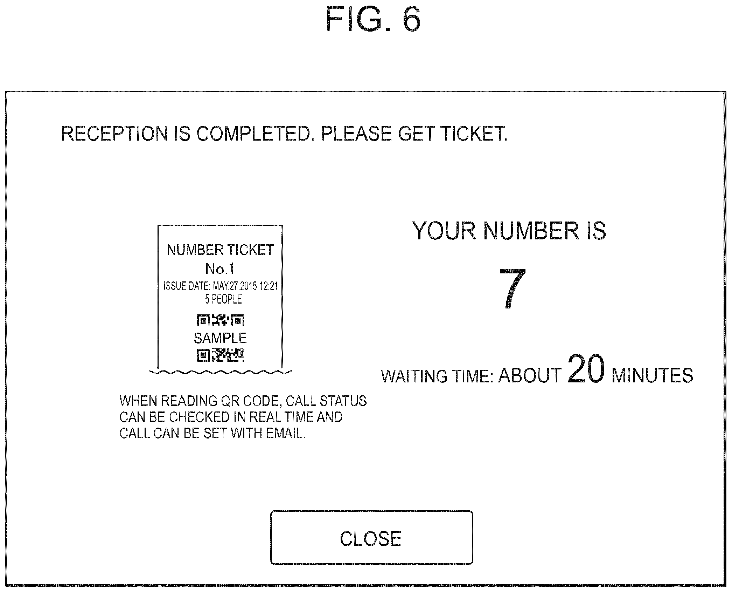

When it is detected that the input operation by a user is performed on the fitting information input screen (step S15: YES), the queue management terminal 200 displays a reception completion screen as exemplified in Fig. 6 (step S16). As shown in Fig. 6, on the reception completion screen, a reception number (waiting number), a waiting time at the moment, or the like are displayed. In addition, a message prompting to receive a turn ticket is displayed, and the user is able to receive the turn ticket printed from a printer (not shown) connected to the queue management terminal 200.

For example, a two-dimensional code is printed on the turn ticket. The user causes his/her user terminal 300 to read a two-dimensional code printed on the turn ticket. By reading the two-dimensional code, the current waiting status (current number of waiting parties, waiting time, or the like) is displayed on the display device 330 of the user terminal 300. Further, as will be described later, when the user is guided to the fitting room on his/her turn, a button for communication is displayed. Also, as the user's turn comes close, a reminder email for calling may be delivered. For example, the user may receive the reminder email by inputting an email address according to the guidance displayed when the user causes his/her user terminal 300 to read the two-dimensional code.

A confirmed new registration information is transmitted from the queue management terminal 200 to the queue management server 100 via the communication network N (step S17). Upon receiving the new registration information from a certain establishment (the clothing store A in this case), the queue management server 100 performs a process that adds one party of waiting to the waiting list based on the received new registration information, and updates the status management table TA2 (step S18).

Note that, in the above example, although the user uses the queue management terminal 200 to register a waiting, the user is also able to use his/her own terminal 300 to register a waiting via the website. In this case, the user first operates the user terminal 300 to access the website of the queue management system 1000, and causes the display device 330 to display the reception screen for the website of the store (the clothing store A) which performs a registration of a waiting. Thereafter, it is possible to be performed in the same procedure as in a case of registering using the queue management terminal 200.

### (Update waiting list)

The contents of each record of the waiting list at each establishment are updated when an employee, or the like of the establishment performs operation such as "cancel", "change", "call", "guide", "completed", or the like using the queue management terminal 200. "cancel" means canceling the waiting, and "change" means changing contents of the waiting once inputted. In addition, "call" means a state where a person, whose turn has come, is called verbally or is informed by a telephone, an email, or the like, "guide" means a state where a person, whose turn has come, is actually guided to the fitting room, and "completed" means that the service in the fitting room has been completed.

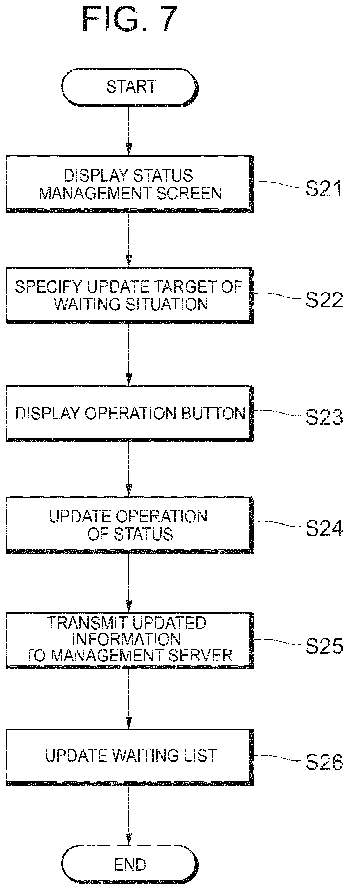

Fig. 7 is a flowchart illustrating a flow of an update process of a waiting list at the queue management system 1000. First, an employee or the like operates the queue management terminal 200 to cause the display device 216 to display a status management screen (step S21).

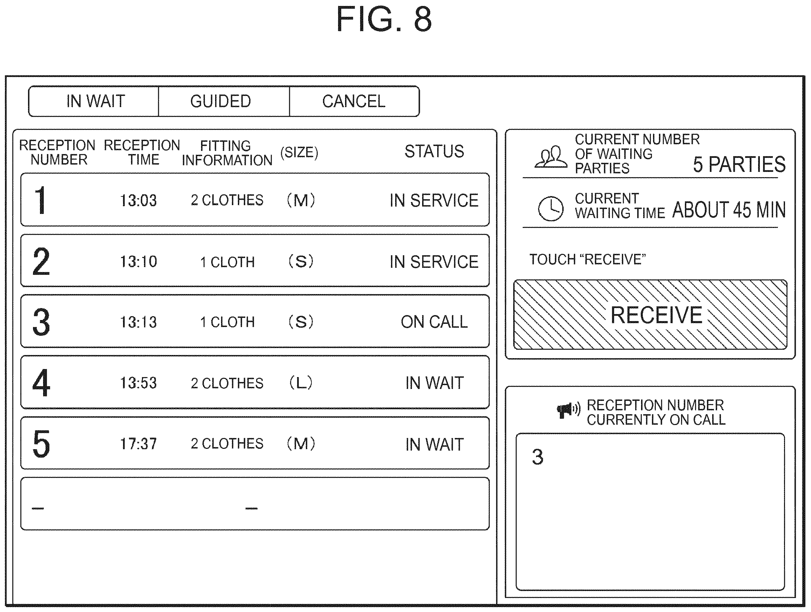

Fig. 8 is a diagram illustrating an example of a status management screen. As shown in Fig. 8, on the status management screen, the status information of the waiting party registered in the waiting list is displayed in the order of reception. Specifically, "reception number", "fitting information (number of clothes, size, or the like)", "status" or the like of the waiting party are displayed.

When the employee or the like specifies an update target of the waiting status from the waiting list displayed on the status management screen and swipes (step S22) the line of the waiting party (for example, reception number "1"), the operation button for performing any one of "call", "guide", "completed", "cancel", and "change" are displayed for the designated waiting party (step S23).

The employee or the like performs the status update operation by tapping a desired operation button (for example, "guide") (step S24). When such an operation is performed, the status update information representing the status update indication is uploaded from the queue management terminal 200 to the queue management server 100 via the communication network N (step S25). The status update information includes information for specifying a record to be updated (for example, reception number "1") and the update operation content (for example, "guide").

The queue management server 100 updates the waiting list of the establishment based on the received status update information (step S26). For example, when the "guide" operation is performed on the reception number "1", the status of the waiting party of the reception number "1" is updated to "in service".

### (Function with in service status)

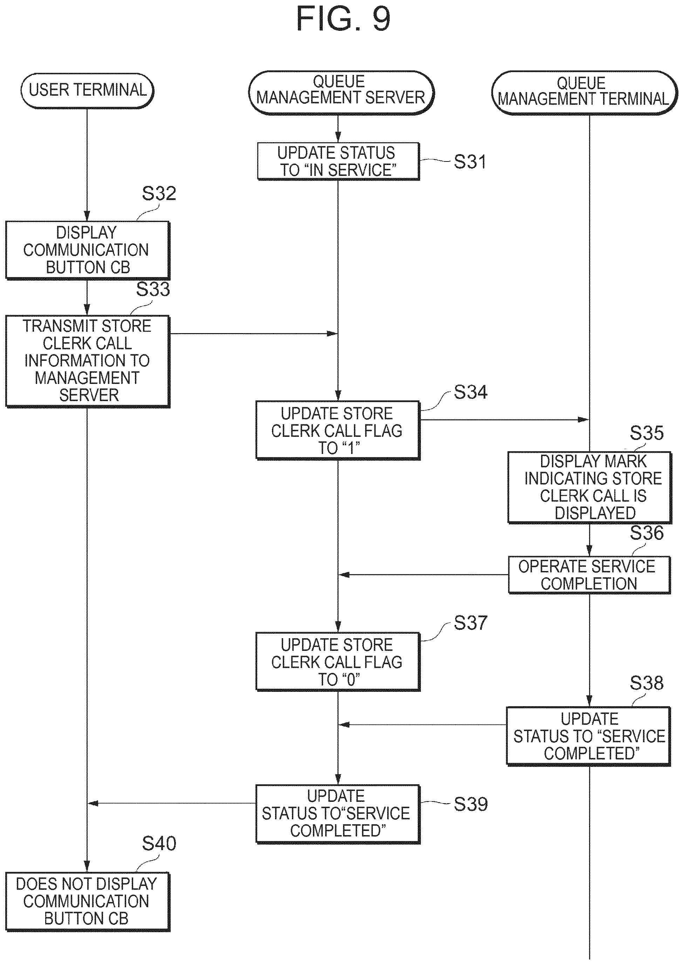

Next, a function that a user is able to use only during a specific status will be described. Here, a function that is capable of being used only during a status is in service will be described with reference to the sequence diagram in Fig. 9.

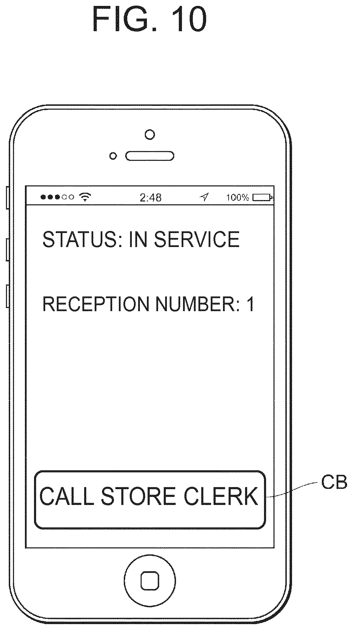

When the user is guided to the fitting room on his/her turn, a status in the waiting list of the user is changed to "in service" (step S31). When the status becomes "in service", a communication button CB is displayed on the display device 330 of the user terminal 300 of the user as shown in Fig. 10 (step S32).

When the user operates the communication button CB, store clerk call information is transmitted to the queue management server 100 via the communication network N (step S 33). The store clerk call information includes information specifying a transmission source on the waiting list (for example, a reception number of the waiting).

Upon receiving the store clerk call information, the queue management server 100 specifies the corresponding record in the waiting list based on the received reception number and updates the store clerk call flag to "1" (step S34). For example, when receiving store clerk call information from the user with a reception number "1", the store clerk call flag of the record with a reception number "1" is updated to "1".

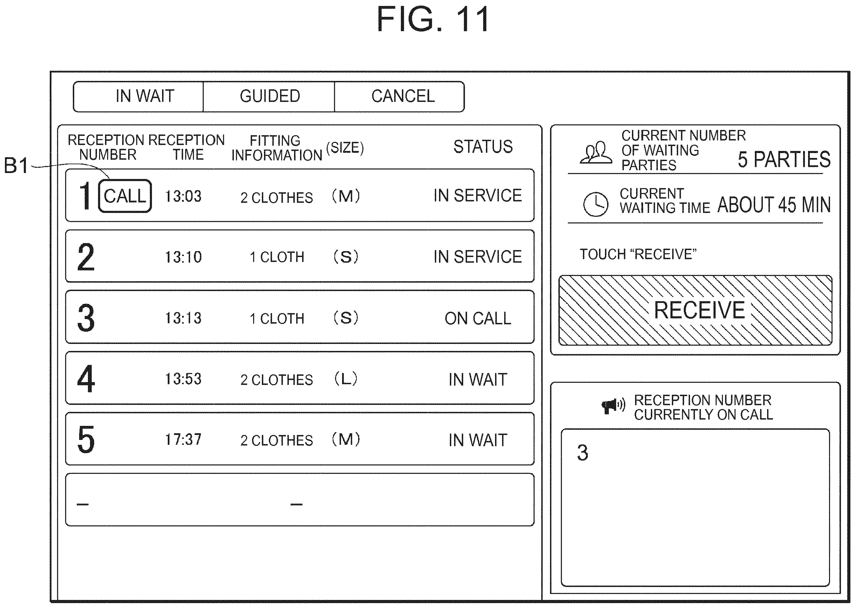

When the store clerk call flag is updated to "1", a mark, in which the store clerk has been called in the column of the corresponding waiting party in the waiting list displayed on the status management screen, is displayed on the queue management terminal 200 viewed by the store clerk (step S 35). For example, as shown in Fig. 11, a "call" button B1 is displayed on the corresponding column and when the "call" button is operated, a fitting room number being used may be displayed. Note that, when guiding a user to the fitting room, a store clerk who guided the user may register a fitting room number by operating the queue management terminal 200 and record the registered fitting room number in association with the reception number in the queue management server 100. In addition, a beacon transmitter may be installed in each fitting room, and information relating to each fitting room number may be included in the beacon. The user terminal 300 of a user may receive a beacon and transmit store clerk call information including a fitting room number. As a result, it is possible to record a fitting room number in association with a reception number in the queue management server 100.

In addition, a list, in which a fitting room number of a user calling a store clerk (a user whose store clerk call flag of a waiting list is set to "1") is arranged in the calling order, may be displayed on the queue management terminal 200 being viewed by a store clerk. When the queue management server 100 receives the store clerk call information, the display device 216 of the queue management terminal 200 may display the fitting room number to which the call was made with a pop-up or the like.

When the service to the fitting room where the store clerk is called is completed, the store clerk who served the user performs a service completed operation using the queue management terminal 200 (step S36), so that the store clerk call flag of the waiting list is updated to "0" in the queue management server 100 (step S37).

Further, when the use of the fitting room ends, the store clerk performs an operation of changing the status from "in service" to "service completed" using the queue management terminal 200 (step S38), and the status of the waiting list is changed to "service completed" in the queue management server 100 (step S39). When the status is changed to "service completed", the communication button CB is not displayed on the user terminal 300 of the user (Step S40).

Note that, a function of the communication button CB is not limited to only transmitting store clerk call information as described above. For example, when the communication button CB is tapped, a menu screen may be displayed so that a user is able to select contents (request items) that the user wishes to request to a store clerk. For example, it may be possible to select the size change of clothes (for example, change from M size to L size), color change (for example, change from white to black), hemming request, or the like. The selected content is transmitted with the store clerk call information and is recorded in association with the reception number of the waiting list. The store clerk is able to check the contents of the request in advance using the queue management terminal 200 and respond by preparing alternative clothes, or the like according to the user's request.

In addition, functions for executing communication using an email, a phone call, a chat, or the like with a store clerk may be included in the menu. Through these means, a user is able to report a detailed request item to a store clerk in advance.

Further, it may be determined whether to display the communication button CB by considering not only the status but also the number of waiting parties. For example, in a case where a number of waiting parties, in which the status is "in wait", is greater than or equal to a predetermined number (for example, greater than or equal to three waiting parties), even if the status is "in service", the communication button CB may not be displayed on the user terminal 300 of the user "in service". In addition, in a case where a number of waiting parties, in which the status is "in wait", is greater than or equal to the predetermined number, the function of the communication button CB may be limited. For example, the selectable request items may be limited (for example, change of size or color is not acceptable and hemming request is acceptable).

### (Analysis of operation rate)

Next, analysis of an operation rate of a fitting room (service response time in the fitting room) will be described.

The queue management server 100 periodically (for example, every business day) calculates the operation rate of the fitness room at the clothing store A. Specifically, for all the records registered in the waiting list, a time when a store clerk was called by the communication button CB (a period during which the store clerk call flag of the waiting list was "1") is totaled, and a ratio of the total time against total business hours is calculated. Thereafter, the ratio is set as an operation rate of the fitting room. For each record, a time at which the store clerk call flag has been updated from "0" to "1" and a time at which the store clerk call flag has been updated from "1" to "0" are recorded. The time when a store clerk was called by the communication button CB is able to be acquired by calculating the time difference between the time at which the store clerk call flag has been updated from "0" to "1" and the time at which the store clerk call flag has been updated from "1" to "0".

As described above, according to the present embodiment, it is possible to provide a specific function that a user can use depending on a waiting status, since a communication button, which is capable of using only during a specific status (in service) and capable of communicating with a store clerk, is displayed on the user terminal 300 owned by the user. In particular, according to the present embodiment, it is possible to provide a function with high convenience for a user with a simple process, since a store clerk can be called from a fitting room using a communication button.

In addition, it is possible to further enhance the convenience for a user by making it possible to report a request item such as size change or hemming at the same time as calling up the store clerk.

When the communication button CB is used by a user, a list of the fitting room number of the user who made a call is displayed on the queue management terminal 200 viewed by the store clerk or notified by a pop-up, so that the store clerk is able to reliably grasp the call by the communication button CB.

Furthermore, in a case where a number of waiting parties, in which the status is "in wait", is greater than or equal to a predetermined number, even if the status is "in service", it is possible to avoid the waiting time of the user of the "in wait" status from becoming a long time, since the communication button CB is not displayed on the user terminal 300 of the user of the "in service" status and the function of the communication button CB is limited.

Note that, the present invention is not limited to the embodiment described above, and it is possible to make various modifications without departing from the spirit of the invention. Therefore, the embodiment described above is merely an example in all respects, and is not to be interpreted limitedly. For example, each processing step described above may be changed in order or performed in parallel as long as there is no inconsistency in the processing contents.

### Reference Signs List

1000 queue management system
100 queue management server
110 management database
120 processor
200 queue management terminal
210 processor
215 input device
215a touch panel
216 display device
220 communication interface
230 storage resource
300 user terminal
310 processor
320 input device
330 display device
340 communication interface
350 storage resource
TA1 client management table
TA2 status management table
N communication network
AP1 queue management application

## Claims

1. A queue management system that manages waitings of users at establishments, comprising:
a storage unit which stores a waiting list for retaining information relating to a status of a user at each establishment; and
a function addition unit which adds a function available only during a specific status, to a portable terminal owned by a user.

2. The queue management system according to claim 1,
wherein the function available only during the specific status includes a function for calling an employee of the establishment.

3. The queue management system according to claim 1 or 2,
wherein the function available only during the specific status includes a function for reporting a request item to the employee of the establishment.

4. The queue management system according to any one of claims 1 to 3,
wherein, in a case where a number of waiting parties is greater than or equal to a predetermined number, the function addition unit does not add the function available only during the specific status to the portable terminal owned by the user.

5. The queue management system according to any one of claims 1 to 4,
wherein, in a case where a number of waiting parties is greater than or equal to the predetermined number, the function addition unit limits a content of the function available only during the specific status.

6. The queue management system according to any one of claims 1 to 5, further comprising:
a notification unit which notifies a terminal viewed by the employee of the establishment that the function available only during the specific status is used by the user.

7. A queue management system that manages waitings of a fitting room, comprising:
a storage unit which stores a waiting list for retaining information relating to a status of a user of a fitting room; and
a function addition unit which adds a function capable of calling a store clerk only while using the fitting room, to a portable terminal owned by the user.

8. A program causing a computer that manages waitings of users at establishments to function as:
a storage unit which stores a waiting list for retaining information relating to a status of a user at each establishment; and
a function addition unit which adds a function available only during a specific status, to a portable terminal owned by a user.
